# EUROPEAN PATENT SPECIFICATION

(11) **EP 3 222 451 B1**
(45) Date of publication and mention of the grant of the patent: **06.03.2019**
(21) Application number: 17160761.7
(22) Date of filing: 14.03.2017
(51) Int. Cl.: B60J 1/20, B32B 17/06

(54) **WINDOW PLATE FOR VEHICLE**
FENSTERSCHEIBE FÜR FAHRZEUGE
PLAQUE DE FENÊTRE POUR VÉHICULE

(30) Priority: 23.03.2016 JP 2016058194
(43) Date of publication of application: 27.09.2017
(73) Proprietor: AGC Inc., Tokyo 100-8405 (JP)
(72) Inventor: KOSAKA, Yoshio, Chiyoda-ku, Tokyo 100-8405 (JP); KANO, Toshiyuki, Chiyoda-ku, Tokyo 100-8405 (JP)
(74) Representative: Müller-Boré & Partner Patentanwälte PartG mbB

(56) References cited:
- EP-A1- 3 306 025
- DE-A1-102009 020 351
- JP-A- 2002 321 526
- US-A1- 2003 192 256

## Description

### BACKGROUND OF THE INVENTION

### 1. Field of the Invention

The disclosure herein generally relates to a window plate for vehicle.

### 2. Description of the Related Art

Conventionally, in order to reduce noise caused by vibration of a glass window during a vehicle travelling or the like, a door glass structure for vehicle having a lifting mechanism for glass window has been disclosed (See for example, Japanese Unexamined Patent Application Publication No. 2002-321526). In the door glass structure for vehicle, a damping member is provided independently from a member for connecting the glass window with the lifting mechanism, and is attached to a lower side of the glass window.

DE 10 2009 020 351 A1 describes a windowpane having a vibration-reducing element which is formed as aluminum-butyl foil applied on the vehicle windowpane. The aluminum-butyl foil has a thickness of one to five millimeter, particularly a thickness of about two millimeter. Two layers of aluminum-butyl foil are provided over each other. The aluminum-butyl foil is glued with the vehicle windowpane.

US 2003/0192256 A1 describes a window alignment device for use in a door having a recess and a peripheral edge and a window regulator. A window panel is adjacent to the window regulator. The panel has a peripheral edge and a portion adapted to conform to the shape of the door and disposed in the recess of the door. Additionally, a locator member is adjacent to the peripheral edge; the locator member is disposed between the door and the window panel. When the panel is fixedly fastened to the regulator, the locator member is removed to form a predetermined gap between the edge of the window panel and the corresponding seal in the door or the body.

### SUMMARY OF THE INVENTION

It is a general object of at least one embodiment of the present invention to provide a window plate for vehicle that substantially obviates one or more problems caused by the limitations and disadvantages of the related art.

This object is solved by the window plate for vehicle having the features disclosed in claim 1. Preferred embodiments are defined in the dependent claims.

### BRIEF DESCRIPTION OF THE DRAWINGS

Other objects and further features of
embodiments will become apparent from the following detailed description when read in conjunction with the accompanying drawings, in which:
FIG. 1 is a plan view depicting an example of a window plate for vehicle according to an embodiment;
FIG. 2 is a cross-sectional diagram depicting an example of the window plate cut along a line A-A in FIG. 1 according to the embodiment;
FIG. 3 is a cross-sectional diagram depicting an example of a window plate according to a first variation of the embodiment;
FIG. 4 is a cross-sectional diagram depicting an example of a window plate according to a second variation of the embodiment;
FIG. 5 is a cross-sectional diagram depicting an example of a window plate according to a third variation of the embodiment; and
FIG. 6 is a cross-sectional diagram depicting an example of a window plate according to a fourth variation of the embodiment.

### DETAILED DESCRIPTION OF THE PREFERRED EMBODIMENTS

In the following, a window plate according to embodiments of the present invention will be described with reference to the accompanying drawings.

Moreover, in the drawings for explaining configurations, coordinates are defined by arrows in the lower left part in each drawing. An explanation will be provided by using the coordinates as necessary. Moreover, in the specification, "X-direction" is assumed to indicate not only a direction from the tail of the arrow representing X-coordinates to the tip, but also a direction inverted by 180 degrees, from the tip to the tail. "Y-direction" and "Z-direction" are also assumed to indicate not only directions from the tails of the arrow representing Y-coordinates and Z-coordinates, respectively, to the tips, but also directions inverted by 180 degrees, respectively, from the tips to the tails. In the specification, the Z-direction and the Y-direction are also referred to as planar directions, and the X-direction is also referred to as a thickness direction.

Moreover, in the specification, technical terms, such as "parallel" or "orthogonal", allow deviations sufficient keep the effect of the present invention. For example, errors of about ±5° are allowed from parallel or orthogonal positional relationships in a strict sense.

Moreover, in the following, as an embodiment of the present invention, a case where the window plate for vehicle is a window plate will be described. However, the present invention is not limited to this. For example, the window plate for vehicle may be a transparent dielectric plate, such as a resin plate.

### (First embodiment)

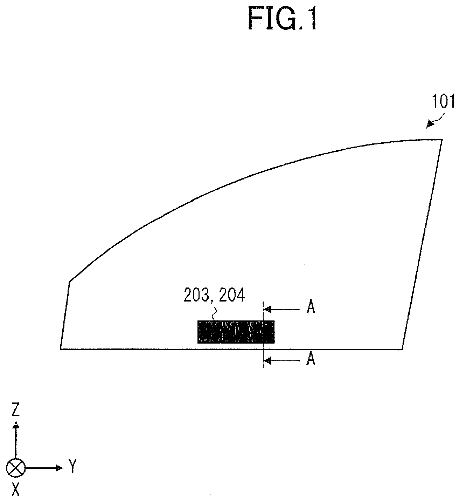

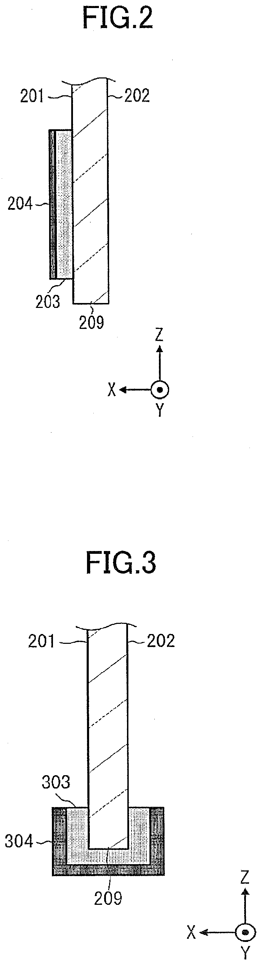

FIG. 1 is a plan view of a window plate for vehicle according to an embodiment. FIG. 2 is a cross-sectional diagram of the window plate cut along a line A-A in FIG. 1 according to the embodiment. FIGs. 3 to 6 are cross-sectional diagrams illustrating first to fourth variations of the embodiment.

FIGs. 1 and 2 illustrate a window plate 101 that is a window plate for vehicle. On a surface of the window plate 101, a metallic member 204 is provided via a viscoelastic member 203.

The window plate 101 includes a first surface 201, a second surface 202 opposing the first surface 201, and an end surface 209 that connects the first surface 201 with the second surface 202.

The window plate 101 is provided with a member such as a holder at a lower side, and may be coupled to a lifting apparatus (not illustrated) and arranged so as to perform a lifting movement. Moreover, the lifting apparatus may not be provided, and the window plate 101 may be arranged so as to be fitted or engaged by a body flange.

The metallic member 204 and the window plate 101 are electrically connected. In the embodiment illustrated in FIG. 2, the viscoelastic member 203 has conductivity, and thereby the electrical coupling of the metallic member 204 with the window plate 101 is enabled.

According to the above-described configuration, the metallic member 204 can be used as a member for inhibiting vibration of the window plate 101, and at the same time, also can be used as a ground. Therefore, a window plate, in which electrostatic charges do not accumulate easily and noise is inhibited, can be provided.

Moreover, the viscoelastic member 203 and the metallic member 204 are arranged only in an inner region of the window plate 101. The inner region represents a region that does not include the end surface 209. When the end surface 209 is polished, the inner region is assumed to be a region that does not include the polished surface. On the end surface 209, other members required for lifting the window plate 101 may be arranged. Because the viscoelastic member 203 and the metallic member 204 are arranged only in the inner region, the end surface 209 allows for space savings.

Elasticity of the viscoelastic member 203 is preferably 0.01 GPa or more but 1 GPa or less at a frequency of 100 Hz and temperature of 20 °C. The frequency of vibration of the window plate 101 and the frequency of vibration of the metallic member can be made different from each other, and noise can be inhibited effectively.

Elasticity of the metallic member 204 is preferably 60 MPa or more but 80 MPa or less at a frequency of 100 Hz, and temperature of 20 °C. The vibration of the window plate 101 can be inhibited effectively.

A thickness of the viscoelastic member 203 is preferably 0.5 mm or more but 3.0 mm or less, more preferably 0.7 mm or more but 2.8 mm or less, and further preferably 1 mm or more but 2.5 mm or less. When the thickness is 0.5 mm or more, the vibration of the window plate 101 can be inhibited effectively. Moreover, when the thickness is 3.0 mm or less, accumulated electrostatic charges on the window plate 101 can be easily transferred to the metallic member 204. Here, the "thickness" indicates a distance in the X-direction in the drawings.

An area of the metallic member 204 is preferably 1000 mm² or more, and further preferably 2000 mm² or more. When the area is 1000 mm² or more, the metallic member 204 can sufficiently act as a ground for accumulated electrostatic charges on the window plate 101.

A weight of the metallic member 204 is preferably 0.1 g or more, and more preferably 0.5 g or more. When the weight is 0.1 g or more, the metallic member 204 can inhibit the vibration of the window plate 101 effectively.

FIG. 3 illustrates a first variation of the embodiment of the present invention. In FIG. 3, a viscoelastic member 303 and a metallic member 304 cover at least a part of an end portion of the window plate 101.

The end portion of the window plate 101 includes a part of the first surface 201 near the end surface 209, a part of the second surface 202 near the end surface 209, and the end surface 209.

In this way, the viscoelastic member 303 can contact the window plate 101 on the three surfaces. Thus, the vibration of the window plate 101 can be inhibited effectively.

The viscoelastic member 303 and the metallic member 304 may be formed so as to cover the end portion of the window plate 101 with respect to at least a part of either of the sides of the window plate 101.

Moreover, in a state before the window plate 101 is sandwiched by the viscoelastic member 303 and the metallic member 304, a width of a part (gap) of the viscoelastic member 303 and the metallic member 304 that sandwiches the window plate 101 is preferably less than the thickness of the window plate 101. According to the above-described configuration, the viscoelastic member 303 is compressed when the window plate 101 is inserted, and thereby the vibration of the window plate 101 can be inhibited effectively.

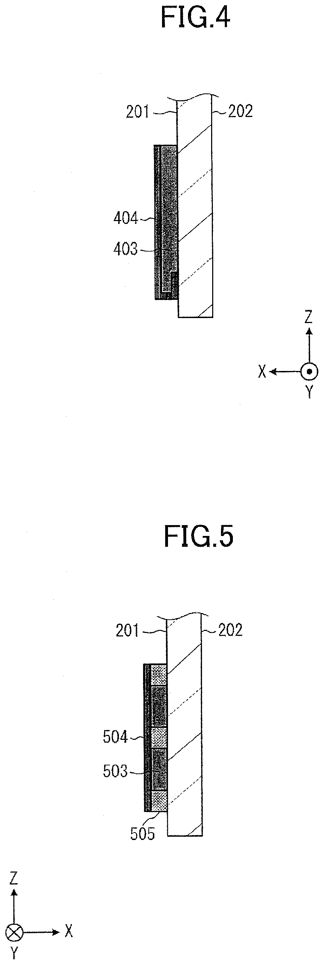

FIG. 4 illustrates a second variation of the embodiment of the present invention. In FIG. 4, a metallic member 404 covers at least a part of an end surface of a viscoelastic member 403, and contacts the window plate 101.

According to the above-described configuration, the metallic member 404 and the window plate 101 are electrically connected, and thereby accumulated electrostatic charges on the window plate 101 become easily removed. Moreover, in FIG. 4, the viscoelastic member 403 may not have conductivity. Therefore, for the viscoelastic member 403, the most suitable material for inhibiting the vibration of the window plate 101 can be used, and the material design becomes easier.

Moreover, when the metallic member 404 has a form of covering the end surface of the viscoelastic member 403, because the structure is simple, it is easy to manufacture the window plate for vehicle.

In FIG. 4, the metallic member 404 has a U-shape. However, the shape of the metallic member 404 is not limited to this, and may have, for example, an L-shape. In this case, the metallic member 404 may be provided with a protruding portion that protrudes in the thickness direction of the viscoelastic member 403 and contacts the window plate 101.

An area of contact between the metallic member 404 the window plate 101 is preferably less than an area of contact between the viscoelastic member 403 the window plate 101. The contact area of the metallic member 404 is more preferably a half of the contact area of the viscoelastic member 403 or less, and further preferably one third of the contact area of the viscoelastic member 403 or less. According to the above-described configuration, a stable adhesion force between the viscoelastic member 403 and the window plate 101 can be ensured.

Moreover, the periphery of the region of contact between the metallic member 404 and the window plate 101 is preferably arranged relative to the area of contact between the viscoelastic member 403 and the window plate 101. Generation of noise by friction of the metallic member 404 with the window plate 101 can be inhibited. Here, the term "periphery" represents one third or more of a perimeter of the region where the metallic member 404 contacts the window plate 101.

FIG. 5 illustrates a third variation of the embodiment of the present invention. In FIG. 5, at least a part of a metallic member 504 is joined to the window plate 101 via a conductive adhesion layer 505.

According to the above-described configuration, the metallic member 504 and the window plate 101 are electrically connected, and thereby accumulated electrostatic charges on the window plate 101 become easily removed. Moreover, in FIG. 5, the viscoelastic member 503 may not have conductivity. Therefore, for the viscoelastic member 503, the most suitable material for inhibiting the vibration of the window plate 101 can be used, and the material design becomes easier.

Moreover, an elasticity fraction, defined by dividing the elasticity of the conductive adhesion layer 505 at a frequency of 100 Hz and at temperature of 20 °C by the elasticity of the viscoelastic member 503 at a frequency of 100 Hz and at temperature of 20 °C, is preferably 1.0 or more but 5.0 or less. According to the above-described configuration, the conductive adhesion layer 505 does not easily hinder the effect of inhibiting the vibration of the window plate 101.

Moreover, an area of adhesion between the conductive adhesion layer 505 and the window plate 101 is preferably less than an area of contact between the viscoelastic member 503 contacts the window plate 101. The contact area of the conductive adhesion layer 505 is more preferably a half of the contact area of the viscoelastic member 503 or less, and further preferably one third of the contact area of the viscoelastic member 503 or less. According to the above-described configuration, the conductive adhesion layer 505 does not easily hinder the effect of inhibiting the vibration of the window plate 101.

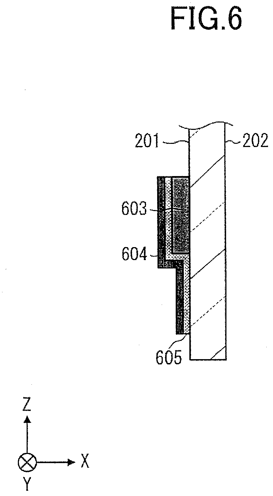

FIG. 6 illustrates a fourth variation of the embodiment of the present invention. In FIG. 6, a region where a metallic member 604 is arranged on the window plate 101 via an elastic member 603 and a conductive adhesion layer 605, and a region where the metallic member 604 is arranged on the window plate 101 only via the conductive adhesion layer 605 are present. In this way, the region for inhibiting the vibration of the window plate 101 and the region for removing the electrostatic charge accumulated on the window plate 101 may be separately provided.

Electrostatic charges may accumulate on a window plate due to friction against wind during the vehicle travelling, or friction against the lifting mechanism (sash part) during lifting. When electrostatic charges accumulate on the window plate, minute dirt particles, such as sandy dust, easily adhere to the window plate, and the window plate easily becomes dirty.

Therefore, there has been a problem to reduce noise while solving the above-described problem. However, the door glass structure for vehicle disclosed in Japanese Unexamined Patent Application Publication No. 2002-321526 could not solve this problem.

In addition, such a problem is not limited to a window plate, but the same problem arises in a resin plate that is a dielectric body.

According to the present invention, a window plate for vehicle, in which electrostatic charges do not accumulate easily and which reduces noises, can be provided.

Further, the present invention is not limited to these examples, but various variations and modifications may be made without deviating from the scope of the present invention.

The present invention can be preferably used as a window plate for vehicle, especially a window plate arranged in a window opening of a vehicle.

The present application is based on and claims the benefit of priority of Japanese Priority Application No. 2016-058194 filed on March 23, 2016.

## Claims

1. A window plate (101) for vehicle comprising:
a metallic member (204, 304, 404, 504, 604) joined via a viscoelastic member (203, 303, 403, 503, 603) on a surface (201) of the window plate (101),
wherein the viscoelastic member (303) and the metallic member (304) cover at least a part of an end portion of the window plate (101), wherein the end portion of the window plate (101) includes a part of the first surface (201) near the end surface (209), a part of the second surface (202) near the end surface (209), and the end surface (209), or
wherein the viscoelastic member (203) and the metallic member (204) are arranged only in an inner region of the window plate (101), **characterized in that** the metallic member (204, 304, 404, 504, 604) and the window plate (101) are electrically connected.

2. The window plate (101) for vehicle according to claim 1,
wherein the viscoelastic member (203, 303, 603) has a conductivity.

3. The window plate (101) for vehicle according to any one of the preceding claims,
wherein the metallic member (404) is provided with a protruding portion that protrudes from the metallic member (404) in a thickness direction of the viscoelastic member (403), and
wherein the protruding portion contacts the window plate (101).

4. The window plate (101) for vehicle according to any one of the preceding claims,
wherein the metallic member (504) covers at least a part of an end portion of the viscoelastic member (503), and contacts the window plate (101).

5. The window plate (101) for vehicle according to any one of the preceding claims,
wherein at least a part of the metallic member (504, 604) is joined to the window plate (101) via a conductive adhesion layer (505, 605).

6. The window plate (101) for vehicle according to claim 5,
wherein an elasticity fraction, defined by dividing elasticity of the conductive adhesion layer (505, 605) at a frequency of 100 Hz and at temperature of 20 °C by elasticity of the viscoelastic member (503, 603) at a frequency of 100 Hz and at temperature of 20 °C, is 1.0 or more but 5.0 or less.

## Patentansprüche

1. Eine Fensterscheibe (101) für ein Fahrzeug, die Folgendes umfasst:
ein metallisches Element (204, 304, 404, 504, 604), das über ein viskoelastisches Element (203, 303, 403, 503, 603) auf einer Oberfläche (201) der Fensterscheibe (101) angefügt ist,
wobei das viskoelastische Element (303) und das metallische Element (304) mindestens einen Teil eines Endabschnitts der Fensterscheibe (101) bedecken, wobei der Endabschnitt der Fensterscheibe (101) einen Teil der ersten Oberfläche (201) nahe der Endoberfläche (209), einen Teil der zweiten Oberfläche (202) nahe der Endoberfläche (209) und die Endoberfläche (209) beinhaltet, oder
wobei das viskoelastische Element (203) und das metallische Element (204) nur in einem inneren Bereich der Fensterscheibe (101) angeordnet sind, **dadurch gekennzeichnet, dass** das metallische Element (204, 304, 404, 504, 604) und die Fensterscheibe (101) elektrisch verbunden sind.

2. Die Fensterscheibe (101) für ein Fahrzeug nach Anspruch 1, wobei das viskoelastische Element (203, 303, 603) eine Leitfähigkeit aufweist.

3. Die Fensterscheibe (101) für ein Fahrzeug nach irgendeinem der vorstehenden Ansprüche,
wobei das metallische Element (404) mit einem vorstehenden Abschnitt versehen ist, der aus dem metallischen Element (404) in einer Dickenrichtung des viskoelastischen Elements (403) vorsteht, und
wobei der vorstehende Abschnitt mit der Fensterscheibe (101) in Kontakt steht (*contacts*).

4. Die Fensterscheibe (101) für ein Fahrzeug nach irgendeinem der vorstehenden Ansprüche,
wobei das metallische Element (504) mindestens einen Teil eines Endabschnitts des viskoelastischen Elements (503) abdeckt und mit der Fensterscheibe (101) in Kontakt steht.

5. Die Fensterscheibe (101) für ein Fahrzeug nach irgendeinem der vorstehenden Ansprüche,
wobei mindestens ein Teil des metallischen Elements (504, 604) über eine leitende Haftschicht (505, 605) mit der Fensterscheibe (101) verbunden ist.

6. Die Fensterscheibe (101) für ein Fahrzeug nach Anspruch 5,
wobei eine Elastizitäts-Bruchzahl, die definiert wird, indem die Elastizität der leitenden Haftschicht (505, 605) bei einer Frequenz von 100 Hz und einer Temperatur von 20 °C geteilt wird durch die Elastizität des viskoelastischen Elements (503, 603) bei einer Frequenz von 100 Hz und einer Temperatur von 20 °C, 1,0 oder mehr, aber 5,0 oder weniger beträgt.

## Revendications

1. Une vitre (101) pour véhicule comprenant :
un élément métallique (204, 304, 404, 504, 604) relié par l'intermédiaire d'un élément viscoélastique (203, 303, 403, 503, 603) sur une surface (201) de la vitre (101),
sachant que l'élément viscoélastique (303) et l'élément métallique (304) recouvrent au moins une partie d'une portion d'extrémité de la vitre (101), sachant que la portion d'extrémité de la vitre (101) inclut une partie de la première surface (201) à proximité de la surface d'extrémité (209), une partie de la deuxième surface (202) à proximité de la surface d'extrémité (209) et la surface d'extrémité (209) ou
sachant que l'élément viscoélastique (203) et l'élément métallique (204) sont disposés uniquement dans une zone intérieure de la vitre (101), **caractérisée en ce que** l'élément métallique (204, 304, 404, 504, 604) et la vitre (101) sont connectés électriquement.

2. La vitre (101) pour véhicule d'après la revendication 1,
sachant que l'élément viscoélastique (203, 303, 603) présente une conductivité.

3. La vitre (101) pour véhicule d'après l'une quelconque des revendications précédentes,
sachant que l'élément métallique (404) est pourvu d'une partie saillante qui saille à partir de l'élément métallique (404) dans une direction d'épaisseur de l'élément viscoélastique (403), et
sachant que la partie saillante est en contact avec la vitre (101).

4. La vitre (101) pour véhicule d'après l'une quelconque des revendications précédentes,
sachant que l'élément métallique (504) recouvre au moins une partie d'une portion d'extrémité de l'élément viscoélastique (503) et qu'il est en contact avec la vitre (101).

5. La vitre (101) pour véhicule d'après l'une quelconque des revendications précédentes,
sachant qu'au moins une partie de l'élément métallique (504, 604) est reliée à la vitre (101) par une couche d'adhésion conductrice (505, 605).

6. La vitre (101) pour véhicule d'après la revendication 5,
sachant qu'une fraction d'élasticité, définie en divisant l'élasticité de la couche d'adhérence conductrice (505, 605) à une fréquence de 100 Hz et à une température de 20 °C par l'élasticité de l'élément viscoélastique (503, 603) à une fréquence de 100 Hz et à une température de 20 °C, vaut 1,0 ou plus mais 5,0 ou moins.
